# FASCICULE DE BREVET EUROPEEN

(11) **EP 2 662 283 B1**
(45) Date de publication et mention de la délivrance du brevet: **04.07.2018**
(21) Numéro de dépôt: 13166701.6
(22) Date de dépôt: 06.05.2013
(51) Int. Cl.: B64C 25/44, F16D 65/18

(54) **Frein pour roue d`aéronef**
Bremse für Fahrwerksrad eines Flugzeugs
A brake for an aircraft wheel

(30) Priorité: 10.05.2012 FR 1254293
(43) Date de publication de la demande: 13.11.2013
(73) Titulaire: Safran Landing Systems, 78140 Vélizy-Villacoublay (FR)
(72) Inventeur: Tanty, Fabien, 28130 CHARTAINVILLIERS (FR)
(74) Mandataire: Parzy, Benjamin Alain

(56) Documents cités:
- EP-A1- 1 533 536
- EP-A2- 1 084 949
- US-A1- 2006 042 889

## Description

L'invention concerne un frein électrique d'une roue d'aéronef comportant un porte-actionneurs qui porte au moins un actionneur électromécanique.

### ARRIERE PLAN DE L'INVENTION

Les systèmes de freinage de la plupart des aéronefs modernes comportent des freins à disques d'acier ou de carbone empilés autour d'un tube de torsion, et des actionneurs de freinage portés par un support et commandés pour appliquer un effort de freinage sur les disques en vue d'exercer sur les roues freinées de l'aéronef un couple de freinage tendant à ralentir celui-ci. Généralement, les roues freinées sont celles des atterrisseurs principaux des aéronefs.

Les actionneurs des freins électromécaniques sont alimentés électriquement et comportent un moteur électrique adapté à déplacer un poussoir.

Le montage de ces actionneurs sur le support, appelé porte-actionneurs dans le cas des freins électromécaniques, doit de préférence permettre un démontage d'un actionneur sans démonter la roue et le frein, ces manoeuvres étant relativement longues et complexes. Il est aussi bien sûr préférable de faciliter l'accès par un opérateur au sol aux moyens de fixation des actionneurs sur le porte-actionneurs, et leur manipulation.

Le montage de ces actionneurs doit aussi répondre à des exigences de tenue mécanique. Les liaisons entre les actionneurs et le porte-actionneurs sont soumises à d'importantes contraintes mécaniques survenant principalement au moment d'un atterrissage et pendant la phase de freinage succédant à cet atterrissage. Généralement, les actionneurs sont vissés directement sur le porte-actionneurs, tel qu'il est connu par exemple du document US 2006/042889 A1. Les niveaux importants de chocs et de vibrations pouvant survenir lors de l'atterrissage et du freinage, ainsi que l'effort exercé par les poussoirs lors du freinage, peuvent provoquer des efforts transverses importants au niveau des vis de fixation.

### OBJET DE L'INVENTION

Le but de l'invention est de proposer un frein électrique de roue d'aéronef permettant un montage et un démontage aisés des actionneurs de freinage, et améliorant la robustesse du montage des actionneurs sur le porte-actionneurs.

### RESUME DE L'INVENTION

En vue de la réalisation de ce but, on propose un frein pour roue d'aéronef comportant un porte-actionneurs qui porte au moins un actionneur électromécanique comportant un poussoir déplaçable axialement selon un axe parallèle à un axe de rotation de la roue en regard d'éléments de friction pour appliquer sélectivement un effort de freinage sur les éléments de friction, le porte-actionneurs et l'actionneur comportant des moyens de guidage pour guider l'actionneur lors de son montage sur le porte-actionneurs selon une direction radiale jusqu'à une position en service, lesdits moyens de guidage formant un appui apte à assurer la transmission d'efforts de freinage de l'actionneur au porte-actionneurs, et des moyens de maintien en position de l'actionneur dans la position en service qui comprennent une bride fixée sur le porte actionneur pour immobiliser l'actionneur sur le porte-actionneurs dans la position de service, les moyens de guidage comportant une gorge située sur l'actionneur électromécanique et une protubérance située sur le porte-actionneurs et adaptée à pénétrer dans la gorge, la gorge s'étendant autour d'un corps de l'actionneur, la protubérance comprenant des doigts destinés à pénétrer dans la gorge, la bride étant partiellement positionnée dans la gorge, la bride étant positionnée sur les doigts de sorte à immobiliser l'actionneur. Le montage et le démontage de l'actionneur s'effectuent donc selon une direction radiale à l'axe de rotation de la roue. Hors, un espace libre important s'étend en regard des actionneurs dans cette direction radiale, ce qui facilite l'accès à l'actionneur et son démontage. Cette disposition autorise en particulier un démontage de l'actionneur sans démonter le frein et la roue, ce qui est par exemple impossible dans le cas d'un actionneur monté directement en regard de l'atterrisseur et prévu pour être démonté axialement. De plus, la plupart des contraintes mécaniques générées par des niveaux importants de chocs ou de vibrations, ou bien survenant en réaction à l'action du poussoir sur les éléments de friction, sont transmises sans solliciter les moyens de maintien en position de l'actionneur sur le porte-actionneurs.

### BREVE DESCRIPTION DES DESSINS

L'invention sera mieux comprise à la lumière de la description qui suit en référence aux figures des dessins annexés parmi lesquelles :
- la figure 1 est une vue en coupe d'une roue d'aéronef munie d'un frein de l'invention,
- les figures 2 et 3 sont des vues schématiques en perspective d'un actionneur agencé pour être monté sur un porte-actionneurs d'un frein de l'invention selon un premier et un second mode de réalisation,
- les figures 4 et 5 sont des vues schématiques en perspective décrivant le montage des actionneurs sur un porte-actionneurs d'un frein de l'invention, un actionneur étant représenté démonté à la figure 5,
- la figure 6 représente schématiquement des moyens de guidage d'un actionneur et d'un porte-actionneurs d'un frein de l'invention selon un autre mode de réalisation,
- la figure 7 représente un exemple des moyens de guidage d'un actionneur et d'un porte-actionneurs qui ne fait pas partie de l'invention.

### DESCRIPTION DETAILLEE DE L'INVENTION

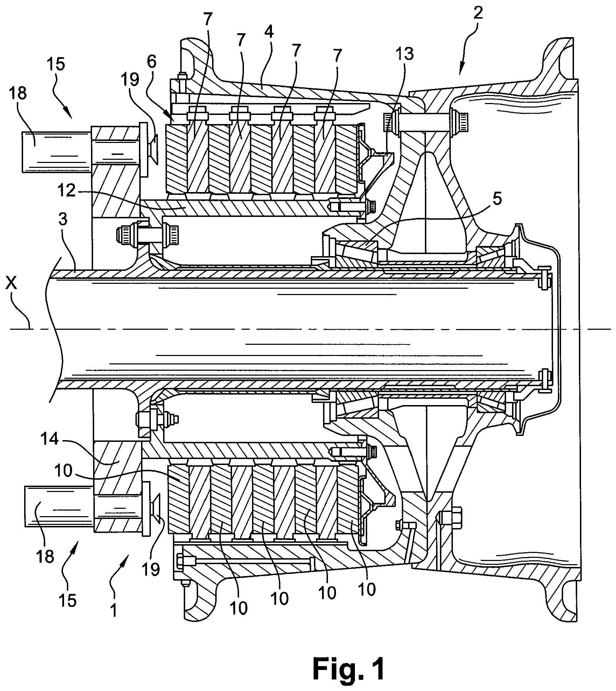

Le frein électrique 1 de l'invention, visible à la figure 1, est destiné à freiner une roue 2 d'aéronef reçue sur un essieu 3 d'axe X pour tourner autour d'un axe de rotation X. La roue 2 comporte une jante 4 portant un pneumatique non représenté et qui est montée pour tourner sur l'essieu 3 au moyen de roulements 5.

On parlera dans la suite de direction axiale pour désigner une direction parallèle à l'axe X, et de direction radiale pour désigner une direction perpendiculaire à la direction précédente.

A l'intérieur de la jante 4 s'étend une pile de disques 6 ayant un axe central coïncidant avec l'axe X. La pile de disques 6 comporte, en alternance, des disques rotors 7 qui sont astreints à tourner avec la jante 4, et des disques stators 10 qui sont astreints à rester solidaires d'un tube de torsion 12 lui-même immobilisé en rotation.

La pile de disques 6 s'étend entre un fond 13 fixe rapporté sur le tube de torsion 12, et un porte-actionneurs 14 également rapporté sur le tube de torsion (par des vis de fixation non représentées). En référence aux figures 1 à 5, le porte-actionneurs 14 porte des actionneurs électromécaniques 15, chaque actionneur 15 comprenant ici un premier corps 16 contenant un moteur électrique 17, et un deuxième corps 18 recevant un poussoir 19 déplaçable axialement en regard de la pile de disques 6 au moyen du moteur électrique 17 pour appliquer de façon commandée un effort de freinage sur la pile de disques 6.

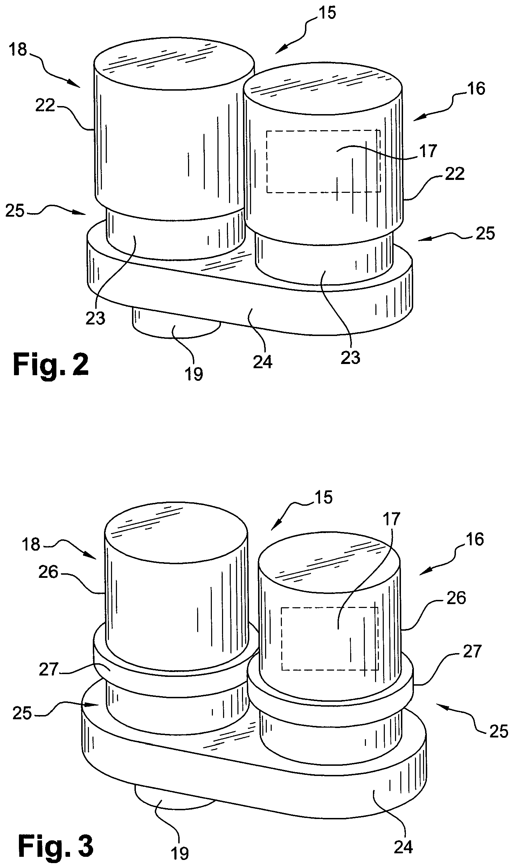

Dans un premier mode de réalisation, visible à la figure 2, le premier corps 16 et le deuxième corps 18 comportent chacun une partie courante 22 de forme générale cylindrique et une partie de pied 23 de forme générale cylindrique de diamètre inférieure à celui de la partie courante. Le premier corps 16 et le deuxième corps 18 sont solidarisés au niveau de leur partie de pied 23 par une embase saillante 24 renfermant un réducteur. Dans chaque corps, une gorge 25 est ainsi définie entre une face de la partie courante et une face en regard de l'embase saillante 24.

Dans un second mode de réalisation, visible à la figure 3, le premier corps 16 et le deuxième corps 18 comportent chacun une partie courante cylindrique 26 autour de laquelle est montée une bague 27. Le premier corps et le deuxième corps sont solidarisés au niveau de leur partie de pied par une embase saillante 24. Dans chaque corps, une gorge 25 est ainsi définie entre une face de la bague 27 et une face en regard de l'embase saillante 24.

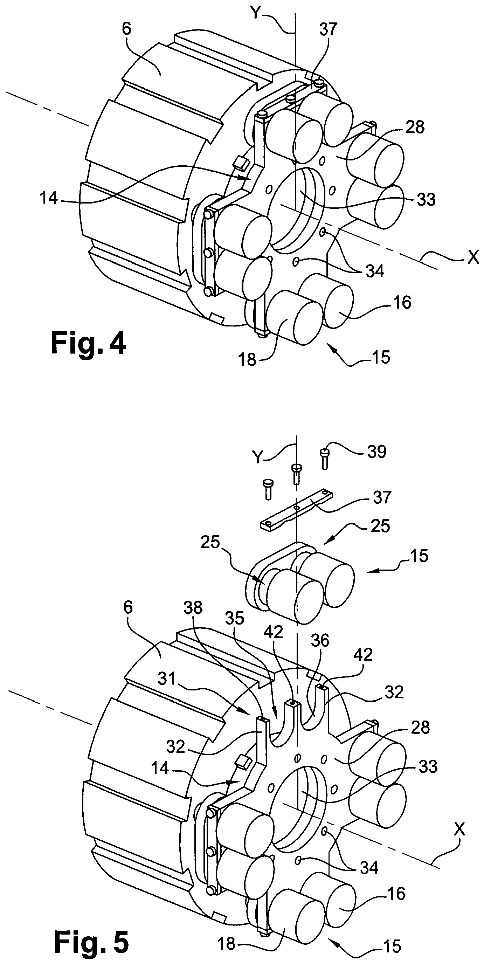

En référence aux figures 4 et 5, sur lesquelles la pile de disques 6 a été simplifiée pour la clarté des dessins, le frein comprend un porte-actionneurs 14 qui comprend un support 28 qui définit quatre ensembles 31 de guidage comportant trois doigts 32 parallèles s'étendant radialement à la périphérie du support 28. Le support 28 comporte une ouverture circulaire 33 permettant le passage de l'essieu, ainsi que des orifices 34 permettant de recevoir les vis de fixation du porte-actionneurs 14 sur le tube de torsion 12. Chaque ensemble de guidage 31 est destiné à recevoir un actionneur 15. Les ensembles de guidage 31 sont régulièrement répartis à la périphérie de la plaque centrale 28 du porte-actionneurs 14. L'espace entre chaque doigt 32 constitue un espace d'accueil 35 pour l'un des corps de l'actionneur 15. Chaque espace d'accueil comporte un évidement semi-circulaire 36 formé dans la plaque centrale 28. Ces évidements semi-circulaires 36 définissent une position en service dans laquelle est positionné l'actionneur 15 lorsqu'il est monté sur le porte-actionneurs 14.

Lors de son montage sur le porte-actionneurs 14, l'actionneur 15 est guidé selon une direction radiale Y entre les doigts 32 d'un ensemble de guidage 31 du porte-actionneurs 14. Les doigts 32 pénètrent dans les gorges 25 des corps 16, 18 de l'actionneur 15, de manière à guider les corps de l'actionneur 15 vers les évidements semi-circulaires 36, et donc l'actionneur 15 vers sa position en service. Les doigts 32 sont conformés pour assurer un guidage empêchant tout mouvement axial de l'actionneur 15 lors de son montage, hormis un jeu de guidage.

Une bride 37 est ensuite rapportée au bout des doigts 32 sur des faces d'appui 38 des doigts perpendiculaires à la direction radiale de montage, de manière à refermer l'espace d'accueil 35 de l'actionneur et à bloquer l'actionneur 15 dans sa position de service. La bride 37 est ensuite fixée sur les faces d'appui 38 des doigts 32 par trois vis de fixation 39 vissées dans trois orifices taraudés 42 dans les des doigts 32 et débouchant sur les faces d'appui 38.

Pour démonter l'actionneur, il suffit de dévisser les vis de fixation 39, de retirer la bride 37, et de faire glisser l'actionneur 15 radialement vers l'extérieur du porte-actionneurs 14.

Un premier avantage de l'invention réside dans la direction radiale Y de montage et de démontage de l'actionneur. En effet, sur les atterrisseurs de la plupart des avions, les actionneurs 15 disposent d'un espace libre important qui s'étend en regard desdits actionneurs dans la direction radiale de montage et de démontage, ce qui permet de monter et de démonter l'actionneur 15 sans démonter la roue et le frein. De plus, la position des vis de fixation 39 de la bride 37 rend leur accès relativement aisé pour un opérateur au sol, qui dispose d'un espace suffisant pour manoeuvrer un tournevis pour installer ou retirer ces vis.

La robustesse du montage des actionneurs 15 est un second avantage de l'invention. Lors d'un atterrissage et d'un freinage, les contraintes résultant des chocs, des vibrations et de l'effort exercé par le poussoir sur les disques, ne génèrent pas de travail en cisaillement sur les vis de fixation 39. De plus, ces vis de fixation 39 sont destinées à fixer la bride 37 dont le rôle est d'empêcher tout mouvement radial de l'actionneur 15. Hors, la plupart des forces exercées sur l'actionneur 15 auraient tendance à lui conférer un mouvement axial. Dans le frein électrique de l'invention, le maintien de l'actionneur en position axiale est assuré principalement par les ensembles de guidage du porte-actionneurs 31, et donc par la structure du frein, et non par les vis de fixation de la bride. Celles-ci sont donc soumises à des efforts relativement faibles.

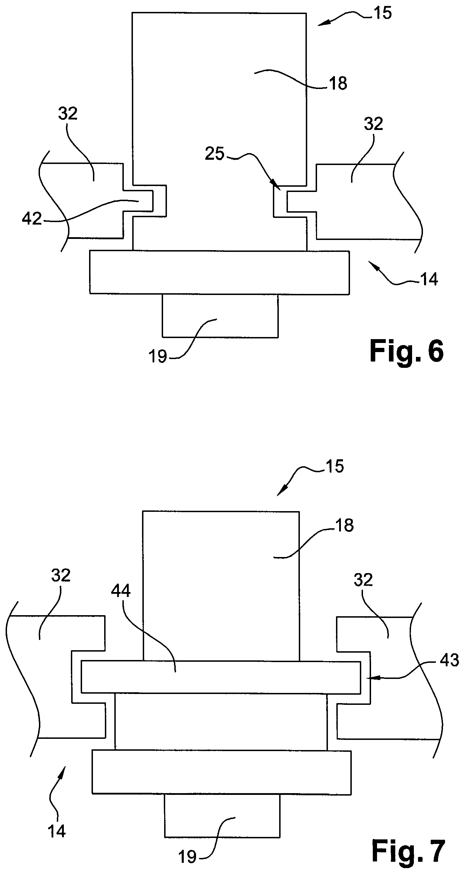

Les figures 6 et 7, sur lesquelles seul le deuxième corps 18 de l'actionneur 15 est visible, représentent des variantes de réalisation des moyens de guidage d'un actionneur 15 dans le porte-actionneurs 14.

En référence à la figure 6, les doigts 32 comportent une nervure 42 qui s'étend le long des doigts 32 à l'intérieur des espaces d'accueil. La nervure 42 pénètre dans la gorge 25 du deuxième corps 18 de l'actionneur 15 lors du guidage de l'actionneur 15 dans le porte actionneur 14.

En référence à la figure 7, les doigts 32 comportent une gorge 43 qui s'étend le long des doigts 32 à l'intérieur des espaces d'accueil, et le deuxième corps 18 de l'actionneur 15 comporte une bague 44 entourant le corps, qui pénètre dans la gorge 43 des doigts 32 lors du guidage de l'actionneur 15.

L'invention n'est pas limitée au mode de réalisation particulier qui vient d'être décrit, mais, bien au contraire, couvre toute variante entrant dans le cadre de l'invention tel que défini par les revendications.

Bien que l'on ait utilisé une architecture particulière de frein électrique pour décrire l'invention, comprenant un certain nombre d'actionneurs électromécaniques, l'invention est bien sûr applicable à tout type de frein comportant un porte-actionneurs et au moins un actionneur électromécanique.

Bien que l'on ait utilisé une bride agencée pour être fixée à l'aide de vis s'étendant radialement dans le porte-actionneurs, il est possible que cette bride soit montée de façon différente, du moment qu'elle immobilise l'actionneur dans sa position de service en empêchant tout mouvement radial de celui-ci.

## Revendications

1. Frein pour roue d'aéronef comportant un porte-actionneurs (14) qui porte au moins un actionneur électromécanique (15) comportant un poussoir (19) déplaçable selon une direction parallèle à un axe de rotation (X) de la roue (2) en regard d'éléments de friction (7, 10) pour appliquer sélectivement un effort de freinage sur les éléments de friction (7, 10), le porte-actionneurs (14) et l'actionneur (15) comportant des moyens de guidage (25, 32) pour guider l'actionneur (15) lors de son montage sur le porte-actionneurs (14) selon une direction radiale (Y) jusqu'à une position en service, lesdits moyens de guidage formant un appui apte à assurer la transmission d'efforts de freinage de l'actionneur au porte-actionneurs, et des moyens de maintien en position (37) de l'actionneur dans la position en service, les moyens de maintien en position (37) comprenant une bride (37) fixée sur le porte-actionneurs (14) pour immobiliser l'actionneur (15) sur le porte-actionneurs (14) en position de service, **caractérisé en ce que** les moyens de guidage comportent une gorge (25) située sur l'actionneur électromécanique (15) et une protubérance (32, 42) située sur le porte-actionneurs (14) et adaptée à pénétrer dans la gorge (25), la gorge s'étendant autour d'un corps de l'actionneur, la protubérance comprenant des doigts destinés à pénétrer dans la gorge, la bride étant partiellement positionnée dans la gorge (25), la bride étant positionnée sur les doigts de sorte à immobiliser l'actionneur.

2. Frein selon la revendication 1, dans lequel la bride (37) est démontable radialement et est fixée au porte-actionneurs (14) par des moyens de fixation (39) comprenant au moins une vis (39) s'étendant radialement.

3. Frein selon la revendication 2, dans lequel la bride (37) vient porter contre une face d'appui du porte-actionneurs (38) perpendiculaire à la direction radiale (Y) de montage de l'actionneur (15).

4. Frein selon la revendication 1, dans lequel la gorge (25) est définie sur l'actionneur entre une face d'une bague (27) entourant un corps (16, 18) de l'actionneur (15) et une face en regard d'une embase saillante (24) du corps (16, 18) de l'actionneur (15).

5. Frein selon la revendication 1, dans lequel les moyens de guidage (25, 32) sont conformés pour assurer un guidage positif empêchant tout mouvement axial de l'actionneur (15) lors de son montage.

## Patentansprüche

1. Bremse für Luftfahrzeugrad, umfassend einen Aktorträger (14), der mindestens einen elektromechanischen Aktor (15) trägt, der einen Stößel (19) umfasst, der in eine Richtung, die parallel zu einer Drehachse (X) des Rades (2) ist, gegenüber von Reibelementen (7, 10) verschiebbar ist, um selektiv eine Bremskraft auf die Reibelemente (7, 10) auszuüben, wobei der Aktorträger (14) und der Aktor (15) Führungsmittel (25, 32) umfassen, um den Aktor (15) während seiner Montage an dem Aktorträger (14) in einer radialen Richtung (Y) bis in eine Betriebsposition zu führen, wobei die genannten Führungsmittel ein Auflager bilden, das geeignet ist, um die Übertragung von Bremskräften von dem Aktor auf den Aktorträger sicherzustellen, sowie Positionshaltemittel (37) zum Halten des Aktors in der Betriebsposition, wobei die Positionshaltemittel (37) einen Flansch (37) umfassen, der an dem Aktorträger (14) befestigt ist, um den Aktor (15) an dem Aktorträger (14) in der Betriebsposition festzusetzen, **dadurch gekennzeichnet, dass** die Führungsmittel eine Nut (25) umfassen, die sich auf dem elektromechanischen Aktor (15) befindet, und einen Vorsprung (32, 42), der sich auf dem Aktorträger (14) befindet und dazu geeignet ist, in die Nut (25) einzudringen, wobei sich die Nut um einen Körper des Aktors erstreckt, wobei der Vorsprung Finger umfasst, die dazu bestimmt sind, in die Nut einzudringen, wobei der Flansch teilweise in der Nut (25) positioniert ist, wobei der Flansch derart auf den Fingern positioniert ist, dass er den Aktor festsetzt.

2. Bremse nach Anspruch 1, bei der der Flansch (37) radial abnehmbar ist und an dem Aktorträger (14) durch Befestigungsmittel (39) befestigt ist, die mindestens eine sich radial erstreckende Schraube (39) umfassen.

3. Bremse nach Anspruch 2, bei der sich der Flansch (37) an einer Auflagefläche (38) des Aktorträgers anlegen wird, die senkrecht zur radialen Richtung (Y) zur Montage des Aktors (15) ist.

4. Bremse nach Anspruch 1, bei der die Nut (25) auf dem Aktor zwischen einer Fläche eines Rings (27), der einen Körper (16, 18) des Aktors (15) umgibt, und einer gegenüberliegenden Fläche einer von dem Körper (16, 18) des Aktors (15) vorstehenden Basis (24) definiert ist.

5. Bremse nach Anspruch 1, bei der die Führungsmittel (25, 32) so geformt sind, dass sie eine positive Führung sicherstellen, die jegliche axiale Bewegung des Aktors (15) während seiner Montage verhindern.

## Claims

1. A brake for an aircraft wheel, the brake comprising an actuator-carrier (14) that carries at least one electromechanical actuator (15) having a pusher (19) that is movable along a direction parallel to an axis of rotation (X) of the wheel (2) and facing friction elements (7, 10) in order to apply a braking force selectively against the friction elements (7, 10), the actuator-carrier (14) and the actuator (15) including guide means (25, 32) for guiding the actuator (15) while it is being installed on the actuator-carrier (14) in a radial direction (Y) until it reaches a service position, said guide means forming a bearing surface suitable for transmitting braking forces from the actuator to the actuator-carrier, and position-holder means (37) for holding the position of the actuator in its service position, the position-holder means (37) comprising a strap (37) fastened to the actuator-carrier (14) in order to prevent the actuator (15) from moving on the actuator-carrier (14) in the service position, the guide means comprising a groove defined in the actuator and a projection (32, 42) located on the actuator-carrier for penetrating in the groove, the groove surrounding a body of the actuator, the projection comprising fingers for penetrating in the groove, the strap being at least partially seated within the groove, the strap being positioned on the fingers in order to prevent the actuator (15) from moving .

2. A brake according to claim 1, wherein the strap (37) is removable radially and is fastened to the actuator-carrier (14) by fastener means (39) including at least one screw (39) that extends radially.

3. A brake according to claim 2, wherein the strap (37) comes to bear against a bearing face of the actuator-carrier (38) that is perpendicular to the radial direction (Y) for installing the actuator (15).

4. A brake according to claim 1, wherein the groove (25) is defined on the actuator between a face of a ring (27) surrounding a body (16, 18) of the actuator (15) and a facing face of a base (24) projecting from the body (16, 18) of the actuator (15).

5. A brake according to claim 1, wherein the guide means (25, 32) are shaped to provide positive guidance preventing any axial movement of the actuator (15) while it is being installed.
